Europäisches Patentamt

European Patent Office

Office européen des brevets

(11) Publication number: **0 179 084 B1**

## EUROPEAN PATENT SPECIFICATION
### published in accordance with Art. 158(3) EPC

(45) Date of publication of patent specification: 26.06.91    (51) Int. Cl.5: **G01N 15/06, G01N 33/28**

(21) Application number: 85901525.7

(22) Date of filing: 09.04.85

(86) International application number:
PCT/GB85/00155

(87) International publication number:
WO 85/04715 (24.10.85 85/23)

(54) METHOD FOR ASSESSING PARTICLE DEPOSITS.

(30) Priority: 09.04.84 GB 8409181
22.11.84 GB 8429482

(43) Date of publication of application:
30.04.86 Bulletin 86/18

(45) Publication of the grant of the patent:
26.06.91 Bulletin 91/26

(84) Designated Contracting States:
DE FR GB IT

(56) References cited:
EP-A- 0 070 148        GB-A- 1 090 900
GB-A- 2 029 580        US-A- 3 049 665
US-A- 3 225 296        US-A- 3 502 970
US-A- 3 748 576        US-A- 4 176 545

(73) Proprietor: THE UNIVERSITY COLLEGE OF
SWANSEA
Singleton Park
Swansea, West Glamorgan, Wales SA2
8PP(GB)

(72) Inventor: LANSDOWN, Anthony, Richard
10 Havergal Close Caswell
Swansea SA3 4RL(GB)
Inventor: JONES, David, Brian
4 Admirals Walk Sketty Swansea
West Glamorgan SA2 8LQ(GB)
Inventor: PRICE, Alwyn, Lewis
38 Bracken Road Margam Port Talbot
West Glamorgan SA13 2AY(GB)

(74) Representative: Newby, John Ross et al
J.Y. & G.W. Johnson Furnival House 14/18
High Holborn
London WC1V 6DE(GB)

## Description

This invention relates to a method for obtaining a quantitative measurement of the amount of particulate material present in a liquid sample. The particulate material can be in contact with the liquid or it can be deposited, for example on a solid substrate. The invention has particular application to the quantification of wear debris present in a used lubricating oil or other fluid circulating in a machine subjected to wear.

It is known to draw down solid particles from their entrainment in a liquid onto a suitable substrate for the purpose of examining the particles and so determining such information as their composition, shape, number or other useful characteristics. Examples are the use of a magnetic plug in a lubricating oil system or the use of a filter to separate particles above a specific size from a liquid.

US-A-4176545 (Oddo) discloses an oil filter located in the lubricating system of an engine, the oil filter being surrounded by an induction coil, an electrical signal from which is monitored by a meter outside the engine whereby a direct reading on the dial of the meter (e.g. marked in engine wear units) will indicate engine wear from normal to emergency conditions. In practice, the filter would be replaced every 200 hours or less to ensure proper operation of this prior art device.

In a further example, magnetic or electric fields may be used to separate polarised or polarisable particles from suspension in a liquid medium, as in GB-A-1,415,311 (Trans-Sonics Incorporated) and GB-A-2103358 (Jones and Kwon).

In a system of moving parts which is operating normally, the loss of particles to a fluid circulating in the system will be roughly at a constant rate so that if a sample of lubricating oil (for example) used in the system for a given period is taken at periodic intervals, it will be carrying similar loads of wear debris. Thus one early indication of a change in the performance or operating mode of a system can be a change in the debris load carried by the circulating fluid. An engine or other machine having oil lubrication may continue to operate in a steady manner for hundreds or thousands of hours. Any change in the quality of lubrication or in the condition of some lubricated surface in that machine may be first detected by a change in the wear debris separated out of the oil system onto a suitable substrate. It can therefore be important to monitor such separated debris routinely in order to detect any change in the condition of the engine or other machine as soon as possible.

The traditional method by which deposited particulate material is examined involves subjecting the deposit to a detailed examination by means of optical or electron microscopy, typically coupled with compositional analysis and particle counting techniques. Such detailed examination is relatively time-consuming and requires the services of highly-trained personnel, and is therefore relatively expensive. For this reason such detailed examination may not be appropriate for frequent routine monitoring of large numbers of liquid systems. GB-A-2103358 describes a particularly elegant way of preparing a deposit for microscopic examination.

This invention makes use of a different method of examination which seeks merely to obtain a numerical quantification or an index of the quantity of the debris present in a sample of liquid removed from the system. The debris can be deposited from the liquid onto a suitable substrate. Such a quantification or quantity index will remain substantially unchanged so long as no significant change occurs in the liquid system, but a change in the quantification or quantity index will indicate a change in the liquid system. Provided therefore that a technique can be provided for obtaining the quantification or quantity index that does not involve too much expense, it can be applied routinely to samples of liquid or particulate material separated from a liquid system in order to detect changes in that system.

Once a significant change in the particle burden in a liquid system has been detected, a deposit of particulate material that heralded the change can be examined in detail as hereinbefore described in order to provide more extensive information about the nature of the changes which have occurred in particle burden and by inference in the machine in which the liquid system was circulating.

In its broadest aspect the invention is set out in the following claim 1, the pre-characterising clause of which is based on the disclosure of GB-A-2103358.

With reference to GB-B-2160655, the Applicant has voluntarily limited the scope of the present application and submitted separate claims for the United Kingdom.

The sample of particles can be a small volume of the liquid from the system placed in a shallow container (e.g. of glass). It is desirable that the material of the container does not affect the force field to any significant extent since this permits a quantification of the sample to be effected simply by noting the change produced in the force field when the container with its sample is, or is not, within the force field.

As an alternative the sample can be produced on apparatus described in GB-A-2103358.

The present invention will now be further described by way of example with reference to the accompanying drawings, in which

Figure 1 shows, in section, a suitable container for holding a liquid sample,

Figure 2 shows the container in place on a magnet to create a particle deposit from a liquid sample in the container,

Figure 3 is a schematic view of apparatus for quantifying a deposit, and

Figure 4 is a further deposit for quantifying.

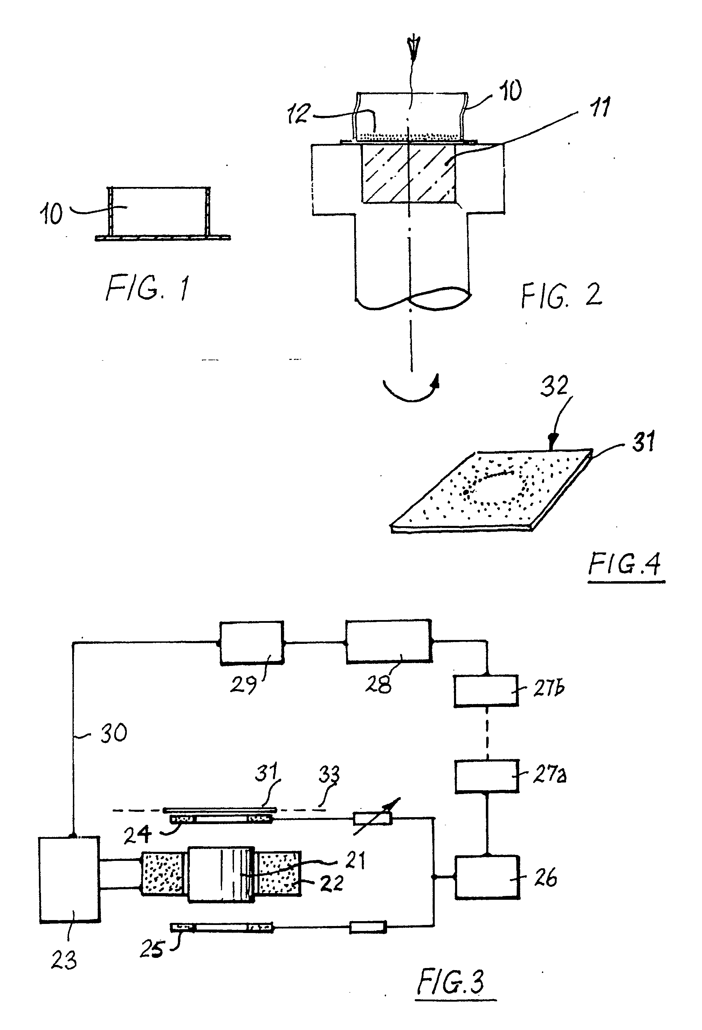

In a typical embodiment of the invention a sample of the system liquid containing the particulate material is delivered to a cylindrical container 10 of the shape shown in Figure 1. The material of the container is such that it does not prevent the use of a measurement technique which depends on monitoring the change caused by the particulate material in a magnetic or electric force field. The dimensions of the container must be suitable for the dimensions of the magnetic or electric force field used in quantification of the particulate material.

The volume of the system liquid delivered to the container 10 is chosen to contain sufficient particulate material to generate a change in the magnetic or electric force field which is large enough for reliable detection and measurement. A solvent may be added to the system liquid at any time prior to the measurement in order to improve homogenisation, fluid flow or particle movement. The sample of system liquid may be delivered to the container 10 by any suitable means, such as, by way of example, a fixed or variable volume pipette, a measuring cylinder, or a direct flow line from the system in which the liquid circulates.

The container 10 is then transferred to a measuring system generally as shown in Figure 4 hereof and an index derived of the quantity of particulate material present in the container 10.

In one embodiment of carrying out the method of the invention, the container 10 is placed within the field of a permanent magnet or an electromagnet 11, or within an electric field, either during or after the delivery of the fluid sample in order to assist in the stabilisation or the particulate material within the container 10. Such a magnet 11 can also be rotated and may be as shown in Figure 2.

In a further embodiment of carrying out the method of the invention the container 10 may contain a pad 12 of absorbent material to absorb the carrier liquid and stabilise the particulate material.

In a still further embodiment of carrying out the method of the invention, a suitable material may be added to the liquid in the container 10 in order to thicken or gelate the liquid and again stabilise the particulate material.

In any of the previously described embodiments or at any stage in the method of the invention, a suitable chemical material may be added to the liquid or to the container 10 in order to generate or modify the electric or magnetic property of the particulate material by which the quantification will be made.

In any of these embodiments or at any stage in the method of the invention, a suitable chemical material may be added to the liquid or to the container 10 in order to stabilise the chemical nature of the particulate material. Such a chemical material might include, but is not restricted to, an anti-oxidant or corrosion inhibitor.

The apparatus shown in Figure 3 does not constitute any part of this invention being merely a convenient way of quantifying a deposit.

Referring to Figure 3 a magnetic core rod 21 is surrounded by an excitation coil 22, the coil 22 being connected to an oscillator 23 operating at between 1 and 50 kilohertz (e.g. 5 kilohertz) and incorporating a push-pull circuit to reduce pick-up of stray signals. The core rod 21 serves to concentrate the AC magnetic field produced by the coil 22.

Two torroidal pick-up coils 24, 25 are disposed in axial alignment with the core rod 21 and are slightly spaced by equal amounts from the ends of the rod 1 so that each coil 24, 25 is in a similar diverging magnetic field. The coils 24, 25 are electrically linked so that their outputs subtract one from the other, the resultant output being fed to a simple amplifier 26 of limited gain. The amplifier 26 feeds its output to a series of amplification stages 27a, 27b, etc., each of which provides a measure of high and/or low pass filtering so that the band pass of the amplifying system is centred on the AC drive frequency of the coil.

The output from the final amplification stage is fed to an AC/DC analogue converter 28 and then to a digital display unit 29.

To compensate for possible variations in the driving power of the oscillator 23, a reference signal can be taken from the oscillator 23, on a line 30, and used to modify the output of the display unit 29.

Figure 4 shows a glass plate 31 with an annular deposit of the kind produced on the rotary depositor which is described in GB-A-2103358. This is a particularly suitable deposit pattern for use with an annular pick-up coil 24 as shown in Figure 3. However, other deposit patterns (e.g. such as produced from the apparatus described in GB-A-1415311) can also be quantified on the apparatus shown in Figure 3.

To use the apparatus, the output to the unit 29 is zeroed (i.e. the outputs from the coils 24, 25 are balanced) and then a substrate 31 with the deposit 32 to be assessed is placed on a support 33. The ferromagnetic particles in the deposit 32 distort the flux through the coil 24 and unbalance the outputs from the two pick-up coils causing a digital read out on the unit 29 which gives an immediate quantification of the ferromagnetic "density" of the deposit 32.

Where the substrate used affects the field by itself it is possible to locate a substrate without deposit thereon just below the pick-up coil 25 and to balance the coil output with a further clean substrate above the coil 24.

In further developments of the invention, separate quantifications or quantity indices are obtained for different areas, groups or categories of particles within the overall deposit of particulate material appearing on the substrate. By way of example, but not exclusively, such different areas may be differentiated in accordance with their axial, radial, lateral, circumferential or vertical position on the substrate, and such groups or categories may be differentiated by size, shape, colour or composition.

The obtaining of separate quantifications or quantity indices for such areas, groups or categories of particles may be achieved by several different techniques, including but not restricted to the following: varying the frequency of oscillation of the electric or magnetic field, varying the intensity of the electric or magnetic field, or using a multiplicity of separate detection systems either individually or in an assembly of such separate detection systems.

## Claims

1. A method of determining the onset of abnormal wear conditions in a mechanical system in which a liquid entraining magnetic or electric force-field-influential wear particles is circulating, which method comprises the steps of removing samples of the liquid from the system at periodic intervals, supporting at least the particle burden in each sample on a substrate, and subjecting the supported particle burden to a magnetic or electric force field as part of a process of monitoring each particle burden, characterised in that the monitoring process includes quantifying each particle burden after removal from the system by subjecting it to a magnetic or electric force field and ascribing a numerical value to the change caused to the force field when the sample is and is not placed therein, and detecting the onset of abnormal wear conditions on the basis of the appearance of an abnormal numerical value.

2. A method according to claim 1, characterised in that a small volume of the liquid circulating in the system is removed from the system and placed in a shallow container (10), the base of which container defines the substrate.

3. A method according to claim 1 or claim 2, characterised in that the substrate does not affect the force field to any significant extent whereby the quantification of the particle burden is effected simply by noting the change produced in the force field when the substrate with its supported sample is, and is not, within the force field.

4. A method according to claim 1 or claim 2, characterised in that the change in force field is determined by monitoring between the force field when a substrate with a sample is supported therein and the force field when a substrate without such a sample is supported therein.

5. A method as claimed in claim 1, in which the particle burden is formed as a deposit (32) on a surface of a non-magnetic substrate (31) by the application of a first magnetic field having a component normal to the substrate surface while liquid extracted from the system flows over it, characterised in that the deposit (32) is subsequently numerically quantified on the basis of its distorting effect on a second magnetic field.

6. A method as claimed in claim 5, characterised in that the deposit (32) of particles exhibits an annular array.

7. A method as claimed in any preceding claim, characterised in that the numerical value is displayed on a digital display unit (29).

Claims for the following Contracting State: GB

1. A method of determining the onset of abnormal wear conditions in a mechanical system in which a liquid entraining magnetic or electric force-field-influential wear particles is circulating, which method comprises the steps of removing samples of the liquid from the system at periodic intervals, supporting at least the particle burden in each sample on a substrate, and subjecting the supported particle burden to a magnetic or electric force field as part of a process of monitoring each particle burden, characterised in that the monitoring process includes quantifying each particle burden after removal from the system by subjecting a liquid sample containing said particle burden to a magnetic or electric force field and ascribing a numerical value to the change caused to the force field when the sample is and is not placed therein, and detecting the onset of abnormal wear conditions on the basis of the appearance of an abnormal numerical value.

2. A method according to claim 1, characterised in that a small volume of the liquid circulating in the system is removed from the system and placed in a shallow container (10), the base of which container defines the substrate.

3. A method according to claim 1 or claim 2, characterised in that the substrate does not affect the force field to any significant extent whereby the quantification of the particle burden is effected simply by noting the change produced in the force field when the substrate with its supported sample is, and is not, within the force field.

4. A method according to claim 1 or claim 2, characterised in that the change in force field is determined by monitoring between the force field when a substrate with a sample is supported therein and the force field when a substrate without such a sample is supported therein.

5. A method as claimed in any preceding claim, characterised in that the numerical value is displayed on a digital display unit (29).

**Revendications**

1. Un procédé de détermination du début de conditions d'usure anormales dans un système mécanique où circule un liquide entraînant des particules d'usure influençant un champ de force magnétique ou électrique, ledit procédé comprenant comme étapes le prélèvement à intervalles réguliers d'échantillons du liquide dans le système, le dépôt d'au moins la charge particulaire dans chaque échantillon sur un substrat, et la présentation de la charge particulaire déposée à un champ de force magnétique ou électrique dans le cadre d'un procédé de contrôle de chaque charge particulaire, caractérisé en ce que le procédé de contrôle comporte la quantification de chaque charge particulaire après le prélèvement dans le système en la soumettant à un champ de force magnétique ou électrique, en assignant une valeur numérique au changement causé dans le champ de force lorsque l'échantillon y est placé et lorsqu'il n'y est pas, et en détectant le début de conditions d'usure anormales à l'apparition d'une valeur numérique anormale.

2. Un procédé selon la revendication 1, caractérisé en ce que un faible volume du liquide circulant dans le système est prélevé du système et placé dans un récipient peu profond (10), la base de ce récipient constituant le substrat.

3. Un procédé selon la revendication 1 ou la revendication 2, caractérisé en ce que le substrat n'affecte pas le champ de force d'une manière importante et permet donc d'effectuer la quantification de la charge particulaire en notant simplement le changement intervenu dans le champ de force lorsque le substrat avec son échantillon déposé se trouve, et ne se trouve pas, à l'intérieur du champ de force.

4. Un procédé selon la revendication 1 ou la revendication 2, caractérisé en ce que le changement du champ de force est déterminé en contrôlant la différence entre le champ de force lorsqu'un substrat avec échantillon y est placé et le champ de force lorsqu'un susbtrat sans un tel échantillon y est placé.

5. Un procédé selon la revendication 1, dans lequel la charge particulaire est formée sous forme de dépôt (32) sur une surface d'un substrat non magnétique (31) par l'application d'un premier champ magnétique ayant une composante perpendiculaire à la surface du substrat pendant que le liquide extrait du système coule sur la surface, caractérisé en ce que le dépôt (32) est ensuite quantifié numériquement en fonction de son effet de distorsion sur un deuxième champ magnétique.

6. Un procédé selon la revendication 5, caractérisé en ce que le dépôt (32) de particules présente un arrangement annulaire.

7. Un procédé selon l'une quelconque des revendications précédentes, caractérisé en ce que la valeur numérique s'affiche sur un dispositif d'affichage numérique (29).

Revendications pour l'Etat contractant suivant: GB

1. Un procédé de détermination du début de conditions d'usure anormales dans un système mécanique où circule un liquide entraînant des particules d'usure influençant un champ de force magnétique ou électrique, ledit procédé comprenant comme étapes le prélèvement à intervalles réguliers d'échantillons du liquide dans le système, le dépôt d'au moins la charge particulaire dans chaque échantillon sur un substrat, et la présentation de la charge particulaire déposée à un champ de force magnétique ou électrique dans le cadre d'un procédé de contrôle de chaque charge particulaire, caractérisé en ce que le procédé de contrôle comporte la quantification de chaque charge particulaire après le prélèvement dans le système en soumettant un échantillon du liquide contenant ladite charge particulaire à un champ de force magnétique ou électrique, en assignant une valeur numérique au changement causé dans le champ de force lorsque l'échantillon y est placé et lorsqu'il n'y est pas, et en détectant le début de conditions d'usure anormales à l'apparition d'une valeur numérique anormale.

2. Un procédé selon la revendication 1, caractérisé en ce que un faible volume du liquide circulant dans le système est prélevé du système et placé dans un récipient peu profond (10), la base de ce récipient constituant le substrat.

3. Un procédé selon la revendication 1 ou la revendication 2, caractérisé en ce que le substrat n'affecte pas le champ de force d'une manière importante et permet donc d'effectuer la quantification de la charge particulaire en notant simplement le changement produit dans le champ de force lorsque le substrat avec son échantillon déposé se trouve, et ne se trouve pas, à l'intérieur du champ de force.

4. Un procédé selon la revendication 1 ou la revendication 2, caractérisé en ce que le changement du champ de force est déterminé en contrôlant la différence entre le champ de force lorsqu'un substrat avec échantillon y est placé et le champ de force lorsqu'un susbtrat sans un tel échantillon y est placé.

5. Un procédé selon l'une quelconque des revendications précédentes, caractérisé en ce que la valeur numérique s'affiche sur un dispositif d'affichage numérique (29).

**Ansprüche**

1. Verfahren zur Bestimmung des Beginns abnormaler Verschleißzustände in einem mechanischen System, in dem eine magnetische oder elektrische Kraftfelder beeinflussende Abriebteilchen mitführende Flüssigkeit umläuft, das die Schritte der Entnahme von Proben der Flüssigkeit aus dem System in regelmäßigen Zeitabständen, des Unterstützens von mindestens der Teilchencharge in jeder Probe auf einem Substrat und des Aussetzens der unterstützten Teilchencharge unter ein magnetisches oder elektrisches Kraftfeld als Teil eines Verfahrens der Überwachung von jeder Teilchencharge umfaßt, dadurch gekennzeichnet, daß der Überwachungsvorgang das Quantifizieren jeder Teilchencharge nach Entnahme aus dem System durch Aussetzen derselben unter ein magnetisches oder elektrisches Kraftfeld und die Zuweisung eines numerischen Wertes zu der im Kraftfeld bewirkten Veränderung, wenn die Probe in dieses eingebracht bzw. nicht eingebracht ist, und das Erfassen des Beginns abnormaler Verschleißzustände auf der Grundlage des Erscheinens eines abnormalen numerischen Wertes einschließt.

2. Verfahren nach Anspruch 1, dadurch gekennzeichnet, daß ein geringes Volumen der im System umlaufenden Flüssigkeit aus dem System entnommen und in einen flachen Behälter (10) eingebracht wird, dessen Boden das Substrat definiert.

3. Verfahren nach Anspruch 1 oder Anspruch 2, dadurch gekennzeichnet, daß das Substrat das Kraftfeld nicht wesentlich beeinflußt, wodurch die Quantifizierung der Teilchencharge einfach durch Feststellung der im Kraftfeld erzeugten Veränderung bewirkt wird, wenn sich das Substrat mit seiner unterstützten Probe innerhalb des Kraftfeldes bzw. nicht innerhalb des Kraftfeldes befindet.

4. Verfahren nach Anspruch 1 oder Anspruch 2, dadurch gekennzeichnet, daß die Veränderung im Kraftfeld durch Überwachung des Unterschiedes zwischen dem Kraftfeld, wenn ein Substrat mit einer Probe darin unterstützt wird, und dem Kraftfeld, wenn ein Substrat ohne eine solche Probe darin unterstützt wird, bestimmt wird.

5. Verfahren nach Anspruch 1, in dem die Teilchencharge als Ablagerung (32) auf einer Oberfläche eines nicht magnetischen Substrats (31) durch Anlegung eines ersten magnetischen Feldes mit einer zur Substratoberfläche normalen Komponente gebildet wird, während aus dem System herausgezogene Flüssigkeit darüber fließt, dadurch gekennzeichnet, daß die Ablagerung (32) darauf folgend numerisch auf Grundlage ihrer verzerrenden Einwirkung auf ein zweites magnetisches Feld quantifiziert wird.

6. Verfahren nach Anspruch 5, dadurch gekennzeichnet, daß die Ablagerung (32) von Teilchen eine ringförmige Anordnung aufweist.

7. Verfahren nach einem der vorhergehenden Ansprüche, dadurch gekennzeichnet, daß der numerische Wert auf einer digitalen Anzeigeeinheit (29) angezeigt wird.

Patentansprüche für folgenden Vertragsstaat: GB

1. Verfahren zur Bestimmung des Beginns abnormaler Verschleißzustände in einem mechanischen System, in dem eine magnetische oder elektrische Kraftfelder beeinflussende Abriebteilchen mitführende Flüssigkeit umläuft, das die Schritte der Entnahme von Proben der Flüssigkeit aus dem System in regelmäßigen Zeitabständen, des Unterstützens von mindestens der Teilchencharge in jeder Probe auf einem Substrat und des Aussetzens der unterstützten Teilchencharge unter ein magnetisches oder elektrisches Kraftfeld als Teil eines Verfahrens der Überwachung von jeder Teilchencharge umfaßt, dadurch gekennzeichnet, daß der Überwachungsvorgang das Quantifizieren jeder Teilchencharge nach Entnahme aus dem System durch Aussetzen einer die besagte Teilchencharge enthaltenden Flüssigkeitsprobe unter ein magnetisches oder elektrisches Kraftfeld und die Zuweisung eines numerischen Wertes zu der im Kraftfeld bewirkten Veränderung, wenn die Probe in dieses eingebracht bzw. nicht eingebracht ist, und das Erfassen des Beginns abnormaler Verschleißzustände auf der Grundlage des Erscheinens eines abnormalen numerischen Wertes einschließt.

2. Verfahren nach Anspruch 1, dadurch gekennzeichnet daß ein geringes Volumen der im System umlaufenden Flüssigkeit aus dem System entnommen und in einen flachen Behälter (10) eingebracht wird, dessen Boden das Substrat definiert.

3. Verfahren nach Anspruch 1 oder Anspruch 2, dadurch gekennzeichnet, daß das Substrat das Kraftfeld nicht wesentlich beeinflußt, wodurch die Quantifizierung der Teilchencharge einfach durch Feststellung der im Kraftfeld erzeugten Veränderung bewirkt wird, wenn sich das Substrat mit seiner unterstützten Probe innerhalb des Kraftfeldes bzw. nicht innerhalb des Kraftfeldes befindet.

4. Verfahren nach Anspruch 1 oder Anspruch 2, dadurch gekennzeichnet, daß die Veränderung im Kraftfeld durch Überwachung des Unterschiedes zwischen dem Kraftfeld, wenn ein Substrat mit einer Probe darin unterstützt wird, und dem Kraftfeld, wenn ein Substrat ohne eine solche Probe darin unterstützt wird, bestimmt wird.

5. Verfahren nach einem der vorhergehenden Ansprüche, dadurch gekennzeichnet, daß der numerische Wert auf einer digitalen Anzeigeeinheit (29) angezeigt wird.

FIG. 1

FIG. 2

FIG.4

FIG.3